# EUROPÄISCHE PATENTSCHRIFT

(11) **EP 3 863 805 B1**
(45) Veröffentlichungstag und Bekanntmachung des Hinweises auf die Patenterteilung: **10.12.2025**
(21) Anmeldenummer: 19742157.1
(22) Anmeldetag: 12.07.2019
(51) Int. Cl.: B25J 5/00

(54) **VERFAHREN ZUM EINSATZ EINES ROBOTERSYSTEMS UND ROBOTERSYSTEM FÜR EINE BEHÄLTERVERARBEITUNGSANLAGE**
METHOD FOR USING A ROBOT SYSTEM, AND ROBOT SYSTEM FOR A CONTAINER PROCESSING FACILITY
PROCÉDÉ POUR L'UTILISATION D'UN SYSTÈME ROBOTIQUE ET SYSTÈME ROBOTIQUE POUR UNE INSTALLATION DE TRAITEMENT DE RÉCIPIENTS

(30) Priorität: 12.10.2018 DE 102018217470
(43) Veröffentlichungstag der Anmeldung: 18.08.2021
(73) Patentinhaber: Krones AG, 93073 Neutraubling (DE)
(72) Erfinder: HAHN, Wolfgang, 93073 Neutraubling (DE)
(74) Vertreter: Grünecker Patent- und Rechtsanwälte PartG mbB
(86) Internationale Anmeldenummer: PCT/EP2019/068849
(87) Internationale Veröffentlichungsnummer: WO 2020/074145

(56) Entgegenhaltungen:
- EP-A1- 2 918 391
- EP-A2- 2 631 042
- DE-A1- 102010 026 798
- US-B2- 9 149 927

## Beschreibung

Die Erfindung betrifft ein Verfahren zum Einsatz eines Robotersystems und ein Robotersystem für eine Behälterverarbeitungsanlage mit den Merkmalen des Oberbegriffs von Anspruch 1 bzw. 6.

Üblicherweise werden Robotersysteme in Behälterverarbeitungsanlagen dazu eingesetzt, Arbeitsaufträge verschiedenster Art durchzuführen, beispielsweise Wartungs- und/oder Instandhaltungsarbeiten an Behälterbehandlungsmaschinen. Beispielsweise kann ein Arbeitsauftrag darin bestehen, das Förderband einer Behälterbehandlungsmaschine mit einem Reinigungsmittel zu reinigen oder mit Schmiermittel zu versorgen. Dazu umfasst das Robotersystem ein bodengestütztes Fahrwerk, um sich in einem Arbeitsbereich der Behälterverarbeitungsanlage fortzubewegen.

In der WO 2009/146899 A1 wird ein multidirektional bewegliches Fahrzeug offenbart, das ein mobiles Fahrzeug und einen daran angeordneten Roboterarm umfasst. Zur selbstständigen Mobilität sind an dem Fahrzeug Räder angeordnet, die mittels einer fahrzeuginternen Steuereinrichtung gesteuert werden.

Nachteilig bei derartigen Robotersystemen ist, dass für den Arbeitsauftrag erforderliche Arbeits- und/oder Verbrauchsmaterialen durch eine Bedienperson manuell nachgefüllt werden müssen.

Die US 5,959,423 offenbart ein System mit einem mobilen Arbeitsroboter und einer separaten Station, die dazu ausgebildet ist, die Bewegung des mobilen Arbeitsroboters zu steuern und daran Wartungsarbeiten durchzuführen. Bei den Wartungsarbeiten werden beispielsweise Teile ersetzt und Verbrauchsstoffe nachgefüllt, die zur Bewegung und für die Arbeit des Arbeitsroboters notwendig sind.

Die EP 2 918 391 A1 offenbart eine Vorrichtung und ein Verfahren zum Umformen von Kunststoffvorformlingen zu Kunststoffbehältnissen mit automatischer Wechseleinrichtung für Garniturteile.

Die DE 10 2010 026 798 A1 offenbart ein Verfahren und eine Vorrichtung zur Vorkommissionierung von Verbauteilen bei der Kraftfahrzeugmontage.

Nachteilig dabei ist, dass die separate Station im Aufbau aufwändig ist und eine Stellfläche im Arbeitsbereich der Behälterverarbeitungsanlage benötigt wird.

Aufgabe der vorliegenden Erfindung ist es daher, ein Verfahren zum Einsatz eines Robotersystems und ein Robotersystem für eine Behälterbehandlungsanlage bereitzustellen, bei denen die Handhabung des für den Arbeitsauftrag erforderlichen Arbeits- und/oder Verbrauchsmaterial vereinfacht ist.

Zur Lösung dieser Aufgabenstellung stellt die Erfindung ein Verfahren zum Einsatz eines Robotersystems mit den Merkmalen des Anspruchs 1 bereit. Vorteilhafte Ausführungsformen der Erfindung sind in den Unteransprüchen genannt.

Dadurch, dass das Robotersystem für den Arbeitsauftrag erforderliches Arbeits- und/oder Verbrauchsmaterial, wie beispielsweise ein Reinigungs- oder Schmiermittel, an einem Versorgungsbereich selbständig entnimmt und für den Arbeitsauftrag zum Arbeitsort transportiert, erfolgt die Entnahme automatisch durch das Robotersystem selbst und ohne die Notwendigkeit einer Bedienperson oder einer aufwändigen Station. Folglich ist die Handhabung des für den Arbeitsauftrag erforderlichen Arbeits- und/oder Verbrauchsmaterials vereinfacht.

Die Behälterverarbeitungsanlage kann mehrere Behälterbehandlungsmaschinen umfassen, wobei die Behälter über einen oder mehrere Transporteure von einer der Behälterbehandlungsmaschinen zu einer Nachfolgenden transportiert werden. Beispielsweise kann mit einer Behälterbehandlungsmaschine ein Getränk in die Behälter abgefüllt werden. Die Behälterbehandlungsmaschinen können eine Behälterherstellungsmaschine, einen Rinser, eine Inspektionsvorrichtung, eine Etikettiermaschine, einen Füller zum Abfüllen eines Getränks in die Behälter, eine Verpackungsmaschine und/oder einen Palettierer umfassen.

In die Behälter kann ein fließfähiges Produkt, wie ein Getränk, ein Lebensmittel, ein Pharmaprodukt, ein Medizinprodukt, ein Reinigungsmittel, ein Spray und/oder ein Körperpflegeprodukt aufgenommen und/oder abgefüllt werden. Vorzugsweise kann mit dem Behälter ein Getränkebehälter gemeint sein. Mit einem Getränk kann Mineralwasser, ein Softdrink, ein Saft und/oder Bier gemeint sein. Mit einem Lebensmittel kann ein Produkt wie das Getränk, Essig, Speiseöl und/oder dergleichen gemeint sein. Vorzugsweise kann ein Behälter gemeint sein, mit dem ein flüssiges oder pastöses Produkt vom Hersteller zum Endverbraucher transportiert wird.

In die Behälter kann jeweils ein fließfähiges Produkt abgefüllt und anschließend ein Verschluss aufgebracht werden. Die Behälter können Kunststoffflaschen, Glasflaschen, Dosen und/oder Tuben sein. Bei Kunststoffflaschen kann es sich im speziellen um PET-, PEN-, HD-PE- oder PP-Flaschen handeln. Ebenso kann es sich um biologisch abbaubare Behälter handeln, deren Hauptbestandteile aus nachwachsenden Rohstoffen, wie zum Beispiel Zuckerrohr, Weizen oder Mais bestehen.

Das bodengestützte Fahrwerk kann sich auf einem Boden mit mehreren Rädern abstützen. Denkbar ist, dass wenigstens eines der Räder beim Fortbewegen angetrieben und/oder gelenkt wird. Ein Elektromotor kann das bodengestützte Fahrwerk zum Fortbewegen antreiben. Das bodengestützte Fahrwerk kann mit einem Lenkmechanismus gelenkt werden, der insbesondere wenigstens ein lenkbares Rad umfasst. Beispielsweise kann der Elektromotor und/oder das lenkbare Rad mit einer Steuerungseinheit des Robotersystems angesteuert werden. Anders ausgedrückt kann das Robotersystem mit einer Steuerungseinheit ausgebildet sein, um das bodengestützte Fahrwerk und/oder eine Robotereinheit zu steuern. Vorzugsweise kann die Steuerungseinheit das Robotersystem in der Behälterverarbeitungsanlage navigieren.

Das Robotersystem kann mit einer aufladbaren Batterie und/oder mit einer elektrischen Schnittstelle mit Strom versorgt werden.

Das Robotersystem kann bei der Durchführung des Arbeitsauftrags wenigstens einen Roboterarm mit wenigstens einem Gelenk und/oder einer Verfahreinheit verfahren, um insbesondere ein Werkzeug oder eine Werkzeugaufnahme zu bewegen. Beispielsweis kann das Werkzeug eine Düse sein, die mit dem Robotersystem verfahren wird, um ein Reinigungsmedium oder ein Schmiermittel zu applizieren. Denkbar ist, dass die Werkzeugaufnahme verschiedenartige Werkzeuge aufnimmt. Vorzugsweise kann der Roboterarm bzw. die Verfahreinheit das Werkzeug dreidimensional im Raum bewegen. Denkbar ist jedoch auch eine zweidimensionale oder eindimensionale Bewegung.

Denkbar ist auch, dass das Robotersystem modular aufgebaut ist und eine mobile Plattform mit dem bodengestützten Fahrwerk und mit mehreren Robotereinheiten verschiedenen Typs zur Durchführung von Arbeitsaufträgen verschiedener Art in der Behälterbehandlungsanlage umfasst. Denkbar ist jedoch auch, dass das Robotersystem eine mobile Plattform mit einer daran permanent angeordneten Robotereinheit umfasst, wobei insbesondere die Robotereinheit den Roboterarm und/oder die Verfahreinheit umfasst.

Bei dem Arbeitsauftrag kann das Arbeits- und/oder Verbrauchsmaterial an einer Behälterbehandlungsmaschine der Behälterverarbeitungsanlage appliziert und/oder daran übergeben werden. Beispielsweise kann ein Reinigungs- oder Schmiermittel an einem Transporteur der Behälterbehandlungsmaschine appliziert werden. Denkbar ist auch, dass Gelenke oder Scharniere mit einem Schmiermittel versehen werden oder ein Schmiermitteltank befüllt wird. Bei dem Arbeits- und/oder Verbrauchsmaterial kann es sich auch um eine Rolle mit Etikettenband für eine Etikettiermaschine handeln.

Das Robotersystem kann erfindungsgemäß das Arbeits- und/oder Verbrauchsmaterial in mindestens einem Zubehöranhänger zum Arbeitsort transportieren. Dadurch wird die Kapazität des Arbeits- und/oder Verbrauchsmaterials erweitert und kann flexibler konfiguriert werden. Beispielsweise kann das Robotersystem flexibel mit verschiedenen Zubehöranhängern kombiniert werden, die unterschiedliche Arbeits- und/oder Verbrauchsmaterialien beinhalten. Denkbar ist, dass der mindestens eine Zubehöranhänger mehrere Zubehöranhänger umfasst, die gleichzeitig parallel oder seriell mit dem Robotersystem kombiniert werden.

Das Robotersystem kann erfindungsgemäß das Arbeits- und/oder Verbrauchsmaterial dadurch entnehmen, dass es am Versorgungsbereich den mindestens einen Zubehöranhänger mit dem erforderlichen Arbeits- und/oder Verbrauchsmaterial selbständig ankuppelt. Dadurch kann das Robotersystem selbst steuern ob und welchen bzw. welche Zubehöranhänger es für den Arbeitsauftrag mitführt. Beispielsweise kann das Robotersystem den mindestens einen Zubehöranhänger einem Magazin mit mehreren Zubehöranhängern entnehmen, die jeweils dieselben oder unterschiedliche Arbeits- und/oder Verbrauchsmaterialen beinhalten.

Das Robotersystem kann am Arbeitsort das für den Arbeitsauftrag erforderliche Arbeits- und/oder Verbrauchsmaterial dem mindestens einen Zubehöranhänger entnehmen. Dadurch muss das Arbeits- und/oder Verbrauchsmaterial nicht unmittelbar einem Vorrat des Robotersystems entnommen werden. Beispielsweise kann das Robotersystem das Arbeits- und/oder Verbrauchsmaterial mit einem Roboterarm oder mit dafür vorgesehen Schläuchen oder dergleichen entnehmen. Denkbar ist auch, dass ein Fördersystem dafür vorgesehen ist, das Arbeits- und/oder Verbrauchsmaterial zum Robotersystem zu fördern.

Das Robotersystem kann eine Kupplung mittels eines Roboterarms betätigen und dadurch den mindestens einen Zubehöranhänger selbständig ankuppeln. Dadurch kann die Kupplung mechanisch ausgeführt sein und benötigt so keinen eigenen Aktuator. Denkbar ist, dass das Robotersystem Kupplungen mehrerer Zubehöranhänger mittels des Roboterarms betätigt und dadurch mehrere Zubehöranhänger selbständig ankuppelt.

Das Robotersystem kann das erforderliche Arbeits- und/oder Verbrauchsmaterial und/oder den mindestens einen Zubehöranhänger mittels digitaler Kennzeichnungselemente, insbesondere mittels eines Barcodes oder RFID-Chips identifizieren. Dadurch kann das Robotersystem automatisch verschiedenartige Materialien oder unterschiedliche Zubehöranhänger identifizieren, so dass Verwechslungen ausgeschlossen werden können.

Denkbar ist, dass das Robotersystem für den Arbeitsauftrag zumindest zeitweise mit einer übergeordneten Steuerungszentrale über eine Datenverbindung verbunden ist, insbesondere über ein Computernetzwerk. Dadurch können mehrere Robotersysteme in der Behälterbehandlungsanlage koordiniert werden. Das Computernetzwerk kann beispielsweise ein drahtloses Netzwie ein WLAN, ein Mobilfunksystem oder dergleichen sein. Die übergeordnete Steuerungszentrale kann beispielsweise ein Computersystem sein, an der eine Bedienperson einen Einsatzplan für mehrere derartige Robotersystem hinterlegt.

Darüber hinaus stellt die Erfindung zur Lösung der Aufgabenstellung ein Robotersystem für eine Behälterverarbeitungsanlage mit den Merkmalen des Anspruchs 6 bereit. Vorteilhafte Ausführungsformen der Erfindung sind in den Unteransprüchen genannt.

Dadurch, dass das Robotersystem dazu ausgebildet ist, für den Arbeitsauftrag erforderliches Arbeits- und/oder Verbrauchsmaterial, wie beispielsweise ein Reinigungs- oder Schmiermittel, an einem Versorgungsbereich selbständig zu entnehmen und für den Arbeitsauftrag zum Arbeitsort zu transportieren, erfolgt die Entnahme automatisch durch das Robotersystem selbst und ohne die Notwendigkeit einer Bedienperson oder einer aufwändigen Station. Folglich ist die Handhabung des für den Arbeitsauftrag erforderlichen Arbeits- und/oder Verbrauchsmaterials vereinfacht. Das Robotersystem kann die zuvor in Bezug auf das Verfahren zum Einsatz eines Robotersystems beschriebenen Merkmale, insbesondere nach einem der Ansprüche 1 - 5 einzeln oder in beliebigen Kombinationen sinngemäß umfassen.

Erfindungsgemäß umfasst das Robotersystem mindestens einen Zubehöranhänger, um das Arbeits- und/oder Verbrauchsmaterial zum Arbeitsort zu transportieren. Dadurch wird die Kapazität des Arbeits- und/oder Verbrauchsmaterials erweitert und kann flexibler konfiguriert werden. Der mindestens eine Zubehöranhänger kann jeweils ein oder mehrere Räder umfassen. Die Räder können aktiv oder passiv lenkbar am jeweiligen Zubehöranhänger angeordnet sein. Denkbar ist, dass der mindestens eine Zubehöranhänger mehrere Zubehörfächer umfasst, die beispielsweise als Schubfächer, Regalfächer und/oder als Kastenfächer ausgebildet sind.

Das Robotersystem umfasst eine Kupplung, um darüber den mindestens einen Zubehöranhänger wahlweise mit dem bodengestützten Fahrwerk zu verbinden und beispielsweise auch davon zu lösen.

Dadurch kann der mindestens eine Zubehöranhänger besonders flexibel mit dem bodengestützten Fahrwerk verbunden werden. Denkbar ist, dass da der mindestens eine Zubehöranhänger über die Kupplung mit der mobilen Plattform verbindbar ist. Denkbar ist auch, dass mehrere Zubehöranhänger über derartige Kupplungen seriell miteinander verbunden bzw. voneinander gelöst werden können.

Weitere Merkmale und Vorteile der Erfindung werden nachfolgend anhand der in den Figuren dargestellten Ausführungsbeispiele näher erläutert. Dabei zeigt:

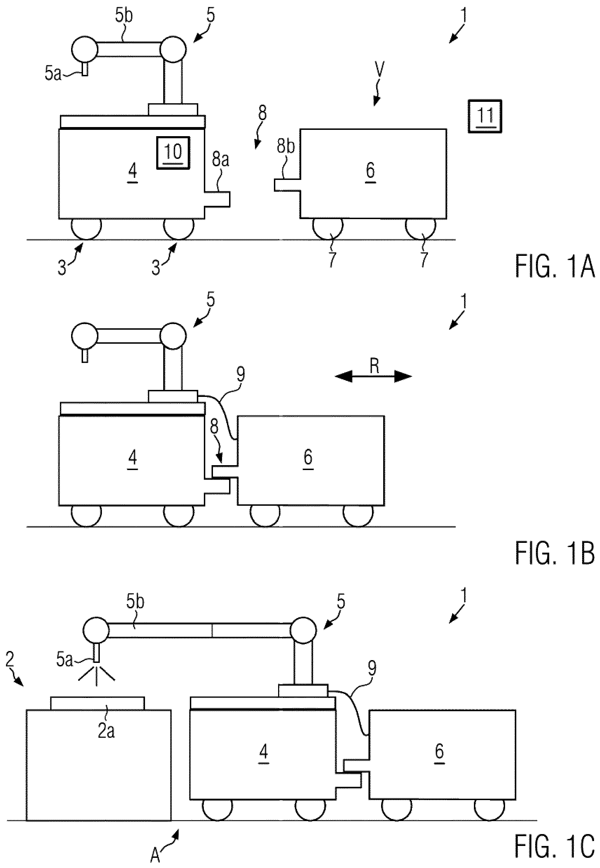

- Figur 1A - 1C: ein Ausführungsbeispiel eines erfindungsgemäßen Verfahrens zum Einsatz eines Robotersystems in einer seitlichen Ansicht.

In den Figuren 1A - 1C ist ein Ausführungsbeispiel eines erfindungsgemäßen Verfahrens zum Einsatz eines Robotersystems 1 in einer seitlichen Ansicht dargestellt. Zu sehen ist das Robotersystem 1 in der Figur 1A vor dem Ankuppeln des Zubehöranhängers 6, in der Figur 1B nach dem Ankuppeln des Zubehöranhängers 6 und in der Figur 1C bei der Durchführung eines Arbeitsauftrags.

In der Figur 1A ist das Robotersystem 1 mit dem bodengestützten Fahrwerk 3 an der mobilen Plattform 4 und mit der Robotereinheit 5 zu sehen. Die Robotereinheit 5 umfasst einen Roboterarm 5b mit wenigstens einem Gelenk und mit einem Werkzeug, das hier beispielsweise als Düse 5a für ein Reinigungsmittel ausgebildet ist. Mit dem Roboterarm 5b kann die Düse 5a beim Reinigen geeignet positioniert bzw. verfahren werden. Die Robotereinheit 5 kann mit der mobilen Plattform 4 modular oder fest verbunden sein. Das bodengestützte Fahrwerk 3 umfasst mehrere Räder, wobei alle Räder angetrieben und lenkbar ausgebildet sind. Dadurch ist das bodengestützte Fahrwerk 3 besonders gut manövrierbar. Denkbar ist jedoch auch, dass nur ein Teil der Räder lenkbar und ein anderer Teil der Räder angetrieben sind.

Zudem ist der Zubehöranhänger 6 mit für den Arbeitsauftrag erforderlichem Arbeits- und/oder Verbrauchsmaterial zu sehen, der vom bodengestützten Fahrwerk 3 abgekoppelt an einem Versorgungsbereich V bereitsteht. Denkbar ist auch, dass das Robotersystem 1 mehrere Zubehöranhänger 6 umfasst, die an das bodengestützte Fahrwerk 3 gleichzeitig seriell oder parallel angekoppelt werden können (ähnlich eines Zuges).

Der Zubehöranhänger 6 umfasst ein Versorgungssystem für Reinigungsmittel und kann über die Kupplung 8 mit dem bodengestützten Fahrwerk 3 verbunden werden. Dazu ist jeweils eine der Kupplungshälften 8a, 8b am Zubehöranhänger bzw. an der mobilen Plattform 4 angeordnet.

Zur Steuerung des Verfahrens umfasst das Robotersystem 1 eine in der mobilen Plattform 4 angeordnete Steuerungseinheit 10, die sowohl das bodengestützte Fahrwerk 3 als auch die Robotereinheit 5 steuert. Zu sehen ist auch die übergeordnete Steuerungszentrale 11, die sowohl das in den Figuren 1A - 1C dargestellte Robotersystem 1 als auch mehrere andere hier nicht dargestellte Robotersystem über ein drahtloses Computernetzwerk steuert, hier beispielsweise ein WLAN.

Darüber hinaus umfasst der Zubehöranhänger 6 einen hier nicht dargestellten RFID-Chip, mit dem er vom Robotersystem 1 identifiziert werden kann. Denkbar ist auch, dass das Reinigungsmittel über einen RFID-Chip identifiziert wird.

Wie in der Figur 1A zu sehen ist, entnimmt das Robotersystem 1 das Arbeits- und/oder Verbrauchsmaterial dadurch, dass es am Versorgungsbereich V den Zubehöranhänger 6 selbständig ankuppelt, der hier beispielsweise das Versorgungssystem mit Reinigungsmittel enthält. Dazu fährt das bodengestützte Fahrwerk 3 so lange auf den Zubehöranhänger 6 zu, dass die zwei Kupplungshälften 8a, 8b miteinander verbunden werden können. Denkbar ist, dass der Roboterarm 5b dazu die Kupplung 8 betätigt und so den Zubehöranhänger 6 selbständig ankuppelt.

Anschließend transportiert das Robotersystem 1, wie in der Figur 1B dargestellt, das Arbeits- und/oder Verbrauchsmaterial im Zubehöranhänger 6 in der Richtung R zum Arbeitsort A in der Figur 1C.

Zu sehen ist in der Figur 1B auch, dass der Zubehöranhänger 6 mit der Kupplung 8 mit der mobilen Plattform 4 verbunden ist. Zusätzlich ist der Versorgungsschlauch 9 zu sehen, über den die Robotereinheit 5 mit dem Zubehöranhänger 6 verbunden ist. Dadurch kann das Versorgungssystem im Zubehöranhänger 6 das Reinigungsmittel zum Roboterarm 5b und zur daran angeordneten Düse 5a fördern.

In der Figur 1C ist zu sehen, dass das Robotersystem 1 am Arbeitsort A das für den Arbeitsauftrag erforderliche Arbeits- und/oder Verbrauchsmaterial, hier das Reinigungsmittel, aus dem Zubehöranhänger 6 entnimmt und auf dem Transporteur 2a einer hier im Detail nicht genauer dargestellten Behälterbehandlungsmaschine 2 appliziert, beispielsweise um ein Transportband zu reinigen. Dazu wird der Roboterarm 5b ausgefahren, so dass die Düse 5a über dem Transporteur 2a angeordnet ist und so das Reinigungsmittel von oben her auf den Transporteur 2a appliziert werden kann. Das Reinigungsmittel wird dazu vom Versorgungssystem im Zubehöranhänger 6 über den Versorgungsschlauch 9 zum Roboterarm 5b und der daran angeordneten Düse 5a gepumpt.

Anschließend ist auch denkbar, dass das Robotersystem 1 nach Erledigung des Arbeitsauftrags wieder zum Versorgungsbereich V zurückfährt und dort den Zubehöranhänger 6 für einen anderen Arbeitsauftrag wechselt, beispielsweise gegen einen Zubehöranhänger mit einem Schmiermittel.

Dadurch, dass das Robotersystem 1 für den Arbeitsauftrag erforderliches Arbeits- und/oder Verbrauchsmaterial, hier beispielsweise das Reinigungsmittel, an dem Versorgungsbereich V selbständig entnimmt, indem es den Zubehöranhänger 6 ankuppelt und für den Arbeitsauftrag zum Arbeitsort A transportiert, erfolgt die Entnahme automatisch durch das Robotersystem 1 selbst und ohne die Notwendigkeit einer Bedienperson oder einer aufwändigen Station. Folglich ist die Handhabung des für den Arbeitsauftrag erforderlichen Arbeits- und/oder Verbrauchsmaterials vereinfacht.

## Patentansprüche

1. Verfahren zum Einsatz eines Robotersystems (1), das an einem Arbeitsort einer Behälterverarbeitungsanlage (2) einen Arbeitsauftrag durchführt, wobei sich das Robotersystem (1) mit einem bodengestützten Fahrwerk (3) in einem Arbeitsbereich der Behälterverarbeitungsanlage fortbewegt,
wobei das Robotersystem (1) für den Arbeitsauftrag erforderliches Arbeits- und/oder Verbrauchsmaterial, wie beispielsweise ein Reinigungs- oder Schmiermittel, an einem Versorgungsbereich (V) selbständig entnimmt und für den Arbeitsauftrag zum Arbeitsort (A) transportiert,
**gekennzeichnet dadurch,**
**dass** das Robotersystem (1) das Arbeits- und/oder Verbrauchsmaterial in mindestens einem Zubehöranhänger (6) zum Arbeitsort (A) transportiert,
wobei das Robotersystem das Arbeits- und/oder Verbrauchsmaterial dadurch entnimmt, dass es am Versorgungsbereich (V) den mindestens einen Zubehöranhänger (6) mit dem erforderlichen Arbeits- und/oder Verbrauchsmaterial selbständig ankuppelt.

2. Verfahren nach Anspruch 1, wobei das Robotersystem (1) am Arbeitsort (A) das für den Arbeitsauftrag erforderliche Arbeits- und/oder Verbrauchsmaterial dem mindestens einen Zubehöranhänger (6) entnimmt.

3. Verfahren nach Anspruch 1 oder 2, wobei das Robotersystem (1) eine Kupplung (8) mittels einer Robotereinheit (5), insbesondere mittels eines Roboterarms (5b) betätigt und dadurch den mindestens einen Zubehöranhänger (6) selbständig ankuppelt.

4. Verfahren nach einem der Ansprüche 1 - 3, wobei das Robotersystem (1) das erforderliche Arbeits- und/oder Verbrauchsmaterial und/oder den mindestens einen Zubehöranhänger (6) mittels digitaler Kennzeichnungselemente, insbesondere mittels eines Barcodes oder RFID-Chips identifiziert.

5. Verfahren nach einem der vorangegangenen Ansprüche, wobei das Robotersystem (1) für den Arbeitsauftrag zumindest zeitweise mit einer übergeordneten Steuerungszentrale (10) über eine Datenverbindung verbunden ist, insbesondere über ein Computernetzwerk.

6. Robotersystem (1) für eine Behälterverarbeitungsanlage (2), mit
einem bodengestützten Fahrwerk (3) zur Fortbewegung in einem Arbeitsbereich der Behälterbehandlungsanlage (2),
wobei das Robotersystem (1) dazu ausgebildet ist, für den Arbeitsauftrag erforderliches Arbeits- und/oder Verbrauchsmaterial, wie beispielsweise ein Reinigungs- oder Schmiermittel, an einem Versorgungsbereich (V) selbständig zu entnehmen und für den Arbeitsauftrag zum Arbeitsort (A) zu transportieren,
**gekennzeichnet dadurch,**
**dass** das Robotersystem (1) mindestens einen Zubehöranhänger (6) umfasst, um das Arbeits- und/oder Verbrauchsmaterial zum Arbeitsort (A) zu transportieren,
wobei das Robotersystem dazu ausgebildet ist, das Arbeits- und/oder Verbrauchsmaterial dadurch zu entnehmen, dass es am Versorgungsbereich (V) den mindestens einen Zubehöranhänger (6) mit dem erforderlichen Arbeits- und/oder Verbrauchsmaterial selbständig ankuppelt.

7. Robotersystem (1) nach Anspruch 6, wobei das Robotersystem (1) eine Kupplung (8) umfasst, um darüber den mindestens Zubehöranhänger (6) wahlweise mit dem bodengestützten Fahrwerk (3) zu verbinden oder davon zu lösen.

## Claims

1. Method for using a robot system (1) that performs a work task at a work location of a container processing plant (2), wherein the robot system (1) moves with a ground-supported chassis (3) in a working area of the container processing plant,
wherein the robot system (1) independently removes working and/or consumable materials required for the work order, such as a cleaning agent or lubricant, from a supply area (V) and transports them to the work location (A) for the work order,
**characterized in that** the robot system (1) transports the working and/or consumable material to the work location (A) in at least one accessory trailer (6),
wherein the robot system takes the working and/or consumable material by independently coupling the at least one accessory trailer (6) with the required working and/or consumable material at the supply area (V).

2. Method according to claim 1, wherein the robot system (1) removes the work and/or consumable material required for the work order from the at least one accessory trailer (6) at the work location (A).

3. Method according to claim 1 or 2, wherein the robot system (1) actuates a coupling (8) by means of a robot unit (5), in particular by means of a robot arm (5b), and thereby independently couples the at least one accessory trailer (6).

4. Method according to one of claims 1-3, wherein the robot system (1) identifies the required work and/or consumable material and/or the at least one accessory trailer (6) by means of digital identification elements, in particular by means of a barcode or RFID chip.

5. Method according to one of the preceding claims, wherein the robot system (1) is connected at least temporarily to a higher-level control center (10) via a data connection, in particular via a computer network, for the work order.

6. Robot system (1) for a container processing plant (2), with
a ground-supported chassis (3) for moving around in a working area of the container handling plant (2),
wherein the robot system (1) is designed to independently remove the working and/or consumable materials required for the work order, such as a cleaning agent or lubricant, from a supply area (V) and transport them to the work location (A) for the work order,
**characterized in that** the robot system (1) comprises at least one accessory trailer (6) for transporting the working and/or consumable material to the work location (A),
wherein the robot system is designed to remove the working and/or consumable material by independently coupling the at least one accessory trailer (6) with the required working and/or consumable material at the supply area (V).

7. Robot system (1) according to claim 6, wherein the robot system (1) comprises a coupling (8) for selectively connecting or disconnecting the at least one accessory trailer (6) to or from the ground-supported chassis (3).

## Revendications

1. Procédé d'utilisation d'un système robotisé (1) qui exécute un ordre de travail sur un lieu de travail d'une installation de traitement de récipients (2), dans lequel le système robotisé (1) se déplace avec un châssis supporté au sol (3) dans une zone de travail de l'installation de traitement de récipients,
dans lequel le système robotisé (1) retire indépendamment le matériau de travail et/ou consommable requis pour l'ordre de travail, tel qu'un agent de nettoyage ou un lubrifiant, dans une zone de service (V) et le transporte jusqu'au lieu de travail (A) pour l'ordre de travail,
**caractérisé en ce que** le système robotisé (1) transporte le matériau de travail et/ou consommable jusqu'au lieu de travail (A) dans au moins une remorque accessoire (6),
dans lequel le système robotisé retire le matériau de travail et/ou consommable en couplant indépendamment ladite au moins une remorque accessoire (6) avec le matériau de travail et/ou consommable requis à la zone de service (V).

2. Procédé selon la revendication 1, dans lequel le système robotisé (1) retire le matériau de travail et/ou consommable requis pour l'ordre de travail de ladite au moins une remorque accessoire (6) sur le lieu de travail (A) .

3. Procédé selon la revendication 1 ou 2, dans lequel le système robotisé (1) actionne un accouplement(8) au moyen d'une unité robotisée (5), en particulier au moyen d'un bras robotisé (5b), et accouple ainsi indépendamment ladite au moins une remorque accessoire (6).

4. Procédé selon l'une des revendications 1 à 3, dans lequel le système robotisé (1) identifie le matériau de travail et/ou consommable requis et/ou ladite au moins une remorque accessoire (6) au moyen d'éléments d'identification numériques, en particulier au moyen d'un code-barres ou d'une puce RFID.

5. Procédé selon l'une des revendications précédentes, dans lequel, pour l'ordre de travail, le système robotisé (1) est au moins temporairement connecté à un centre de contrôle (10) de niveau supérieur via une connexion de données, en particulier via un réseau informatique.

6. Système robotisé (1) pour une installation de traitement de récipients (2), avec un châssis supporté au sol (3) pour le déplacement dans une zone de travail de l'installation de traitement de récipients (2),
dans lequel le système robotisé (1) est conçu pour retirer indépendamment le matériau de travail et/ou consommable requis pour l'ordre de travail, tels qu'un agent de nettoyage ou un lubrifiant, dans une zone de service (V) et pour le transporter jusqu'au lieu de travail (A) pour l'ordre de travail,
**caractérisé en ce que** le système robotisé (1) comprend au moins une remorque accessoire (6) pour transporter le matériau de travail et/ou consommable jusqu'au lieu de travail (A),
dans lequel le système robotisé est conçu pour retirer le matériau de travail et/ou consommable en couplant indépendamment ladite au moins une remorque accessoire (6) avec le matériau de travail et/ou consommable requis à la zone de service (V).

7. Système robotisé (1) selon la revendication 6, dans lequel le système robotisé (1) comprend un accouplement (8) pour connecter ou déconnecter sélectivement ladite au moins une remorque accessoire (6) au châssis supporté au sol (3).
